# DEMANDE DE BREVET EUROPEEN

(11) **EP 0 532 412 A1**
(43) Date de publication de la demande: **17.03.1993**
(21) Numéro de dépôt: 92402464.9
(22) Date de dépôt: 09.09.1992
(51) Int. Cl.: G02C 1/08

(54) **Monture pour lunettes de sécurité**

(30) Priorité: 10.09.1991 FR 9111156
(71) Demandeur: COMASEC INTERNATIONAL SA, F-75018 Paris (FR)
(72) Inventeur: van Peteghem, Florence, F-75018 Paris (FR)
(74) Mandataire: Derambure, Christian

(57) **Abrégé**

L'invention concerne une face pour monture de lunettes de sécurité en matière plastique injectée comprenant deux parties distinctes respectivement supérieure et inférieure chacune pourvue de profonds drageoirs anti-reculs et comprenant d'une part une moitié de chacune de deux charnières de branches supportant un organe formant pivot avec lequel peut coopérer un organe complémentaire d'une branche, et d'autre part une moitié du pont ; les deux moitiés du pont permettant le montage amovible d'une clavette d'association rigide. Les deux parties sont associées rigidement l'une à l'autre de manière amovible, d'une part à l'endroit des deux charnières de branches, grâce aux branches qui enserrent les organes formant pivot de la face et, d'autre part, à l'endroit du pont grâce à la dite clavette.

## Description

L'invention concerne une monture pour lunettes de sécurité.

On connaît déjà des montures pour lunettes de sécurité dont la face formant des cercles support d'oculaires de protection est agencée fendue à l'endroit du pont , les parties supérieure et inférieure de la face étant réunies à l'endroit de cette fente soit par une vis montée dans un trou taraudé de l'une des parties et traversant un trou formant appui de l'autre partie (voir par exemple document FR-A-2 271 594), soit par une pièce enclipsable faisant en même temps office de pince-nez (voir par exemple document FR-A-2 068 038). En outre, on connaît déjà des montures pour lunettes de sécurité dont la face formant des cercles support d'oculaires de protection est agencée fendue à l'endroit de liaison avec les branches, les parties supérieure et inférieure de la face étant réunies à l'endroit de ses branches par les branches elles-mêmes (voir par exemple document GB-A-734 208). De telles montures permettent un remplacement aisé des oculaires protecteurs.

On connaît aussi des montures pour lunettes correctrices agencées pour que les cercles de la face puissent être ouverts, lorsque nécessaire, pour le remplacement des oculaires correcteurs. On peut se référer ainsi au document US-A-3 801 189 selon lequel l'ouverture est réalisée à l'endroit du pont, la fermeture étant assurée au moyen d'un clip rapporté. Selon le document US-A-3 826 564, chaque cercle est en deux parties montées pivotantes et maintenues vers le pont, en position fermée, au moyen d'un levier. Une disposition analogue est prévue par le document GB-A-2 181 859. Enfin, le document GB-A-2 199 155 prévoit un ensemble de dispositions, toutes destinées au remplacement des verres.

Dans le document DE-A-2 448 842, il est représenté de façon purement schématique une face en deux parties, chacune comprenant la moitié d'un cercle. Chacune de ces parties a une forme générale en W ou en S. Les deux parties sont reliées et associées l'une à l'autre, d'une part à l'endroit des charnières et, d'autre part, à l'endroit du pont par un assemblage en queue d'aronde.

Selon le document FR-A-1 049 822, une monture de lunettes en fil métallique se compose de deux gouttières d'orientation inverse, l'une supérieure destinée à coiffer le bord supérieur et le bord latéral extérieur de chacun des verres jusqu'à hauteur des branches, l'autre inférieure destinée à coiffer la partie restante du bord des verres à l'exception de la partie supérieure du bord interne et incurvée vers le haut de sa partie médiane. Ces deux gouttières sont réunies d'une part, à chaque extrémité, par une vis et d'autre part, en leur milieu par un prolongement de l'aile extérieure de la gouttière supérieure solidarisée par une vis maintenant également une plaquette portant le pince-nez appliqué contre les verres internes des deux gouttières par une vis transversale. La complexité du montage/démontage lié au dévissage des vis, l'utilisation du fil métallique impliquant une ductilité de la monture constituent deux des incompatibilités majeures de ce type de système pour des lunettes de sécurité.

Les montures pour lunettes correctrices peuvent être réalisées en plusieurs matériaux et, en particulier, en matière plastique. Selon une réalisation typique on met en oeuvre de l'acétate en plaque qui est découpé à la forme voulue et chauffée pour permettre le montage des oculaires correcteurs. Cette technologie est bien adaptée à des productions de haute qualité esthétique acceptant un connaît de production significatif.

Une telle technologie de découpe et de chauffage et, plus généralement, les technologies mises en oeuvre pour les montures et les lunettes correctrices sont généralement mal adaptées voire même totalement inadaptées aux montures et aux lunettes de sécurité lesquelles ont des spécificités propres. La première spécificité est de nature fonctionnelle : la paire de lunettes doit pouvoir encaisser des chocs importants sans être détruite, déformée, cassée, abîmée. Les oculaires doivent pouvoir être changés. Ils doivent être maintenus en place sur la monture même en cas de choc frontal. La seconde spécificité est de nature économique : la productivité de la fabrication de ce genre de lunettes doit être importante, le prix de revient faible, et la production adaptée à de grandes séries néanmoins adaptables.

Pour assurer cette sécurité du maintien des oculaires protecteurs sur la face de la monture, on prévoit, ainsi, des drageoirs anti-reculs ayant comme caractéristiques d'avoir une profondeur suffisante de l'ordre de quelques millimètres, nettement supérieure à celle des montures pour lunettes correctrices ; et d'avoir un méplat vers l'arrière assurant le maintien des oculaires en cas de choc ou de force appliquée frontalement.

Pour remplir ces exigences de productivité et de coût, on fait appel à la technique de l'injection de matières plastiques telles que des polyamides.

Toutefois, cette technique d'injection, lorsqu'elle est mise en oeuvre pour de telles montures, peut à son tour être source de difficultés, telle que la nécessaire utilisation de moules à tiroir, dont on connaît le coût et la sophistication.

L'invention vise donc à résoudre ces problèmes et à proposer une monture pour lunettes de sécurité - et donc aussi ladite paire de lunettes - mais plus spécialement une face de monture qui en combinaison présente les caractéristiques suivantes :
- être réalisée par injection de matière plastique,
- au moyen de moules traditionnels et non de moules à tiroir,
- et remplir les exigences techniques et fonctionnelles requises pour la sécurité.

A cet effet, l'invention propose d'abord une face pour monture de lunettes de sécurité en matière plastique injectée, caractérisée par le fait qu'elle comprend deux parties distinctes respectivement supérieure et inférieure ; chacune de ces parties définissant sensiblement deux demi-cercles pourvus de profonds drageoirs anti-reculs et comprenant d'une part une moitié de chacune des deux charnières de branches ayant une saillie s'étendant sensiblement perpendiculairement au plan principal de la face supportant un organe formant pivot avec lequel peut coopérer un organe complémentaire d'une branche, et d'autre part une moitié du pont ; les deux moitiés du pont étant conformées en creux et en relief pour permettre le montage amovible d'une clavette d'association rigide ; les deux parties étant associées rigidement l'une à l'autre de manière amovible de part et d'autre d'un plan de joint où se trouvent les deux faces de joint en contact des deux parties, d'une part à l'endroit des deux charnières de branches, grâce aux branches qui enserrent les organes formant pivot de la face et, d'autre part, à l'endroit du pont grâce à la dite clavette.

L'invention concerne également une clavette pour cette face de monture de lunettes, caractérisée par le fait qu'elle se présente sous la forme d'une pièce moulée en matière plastique ayant une première partie médiane d'association avec la partie inférieure de la face, une deuxième partie terminale en saillie destinée à venir s'appliquer en blocage sur la zone d'appui supérieure de la partie supérieure de la face, et une troisième partie également terminale, renflée, formant un nez-selle, et venant s'appliquer en blocage sur la partie inférieure dans la zone d'appui inférieure.

L'invention concerne également une monture de lunettes de sécurité comprenant une face et une clavette telles qu'elles viennent d'être mentionnées et deux branches.

Enfin, l'invention concerne une paire de lunettes de sécurité comprenant une telle monture de sécurité et deux oculaires de sécurité dans les cercles.

Les autres caractéristiques de l'invention résulteront de la description qui suivra en référence aux dessins annexés dans lesquels :

Les figures 1 et 2 sont deux vues schématiques, en élévation, d'une face pour monture de lunettes de sécurité selon l'invention, respectivement du côté externe et du côté interne, les deux parties de la face étant associées l'une avec l'autre au moyen de la clavette.

Les figures 3 et 4 sont deux vues schématiques en élévation respectivement de la partie supérieure et de la partie inférieure, du côté interne, la clavette étant enlevée.

La figure 5 est une vue schématique en coupe selon la ligne V-V de la figure 1 illustrant l'association des deux parties dans la zone d'une branche et le montage de la branche.

Les figures 6 et 7 sont deux vues schématiques en coupe selon les lignes VI-VI et VII-VII de la figure 2 illustrant les reliefs de guidage du pont.

La figure 8 est une vue schématique en coupe selon la ligne VIII-VIII de la figure 1 illustrant le profil du drageoir anti-recul de la face.

Les figures 9, 10 et 11 sont trois vues schématiques respectivement en élévation, de côté et de dessus de la clavette d'association rigide des deux parties de la face.

L'invention concerne une paire de lunettes de sécurité dont la monture, et plus spécialement la face 1, est réalisée en matière plastique injectée, telle que du polyamide.

Selon l'invention, la structure donnée à la face 1 permet sa réalisation au moyen d'un moule classique au lieu d'un moule à tiroir.

Dans les deux cercles 2 de la face 1 pourvus de drageoirs 3 sont montés deux oculaires de sécurité 4. Deux cercles 2 sont réunis l'un à l'autre par un pont 5. A ses deux extrémités, la face 1 comprend deux embases de charnière 6 pour deux charnières 7 auxquelles sont associées les deux branches 8.

La face 1 comprend deux parties distinctes respectivement supérieure et inférieure 9, 10. Ces deux parties 9, 10 sont réalisées séparément dans deux moules distincts ou dans un moule à deux parties distinctes. Elles sont ensuite associées entre elles, ainsi qu'il est décrit, de manière à supporter les oculaires de sécurité 4.

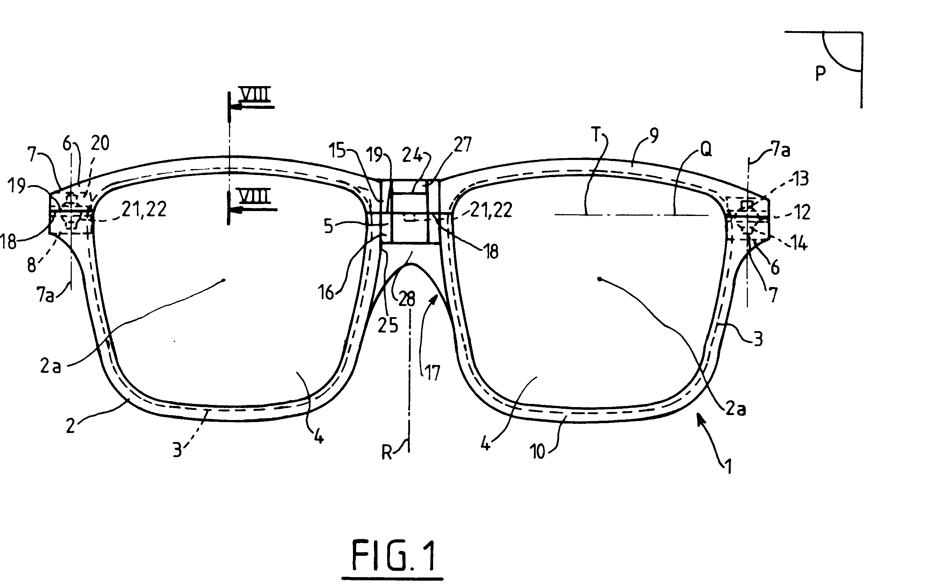

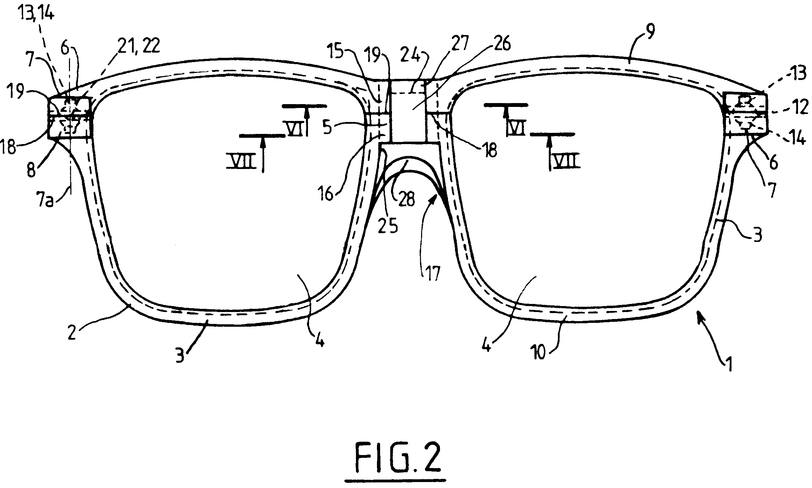

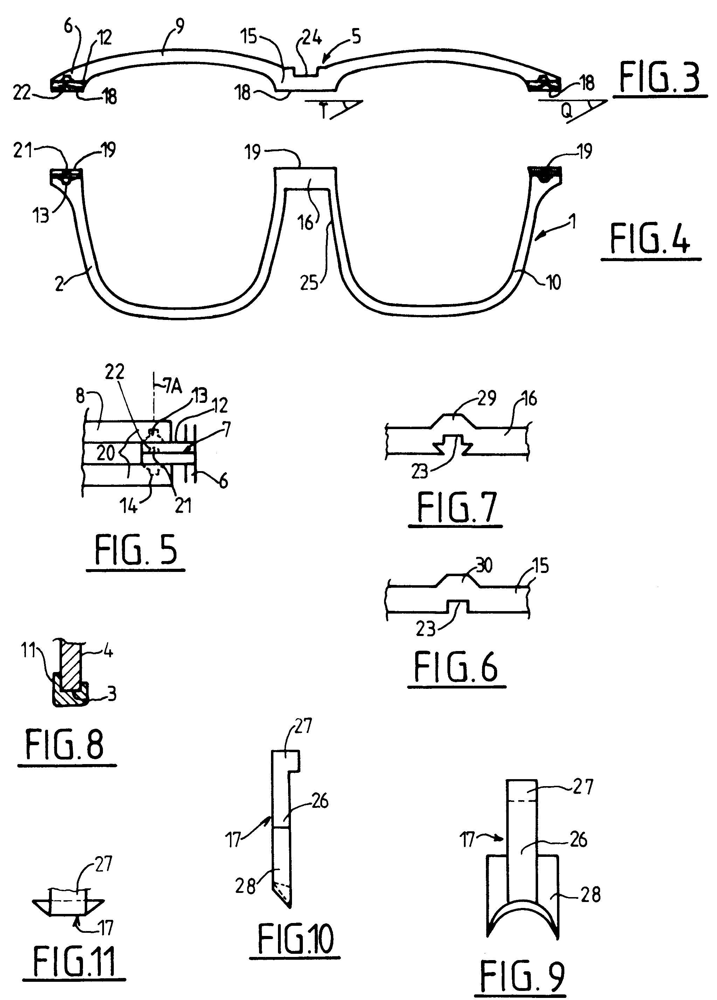

Pour des raisons de simplification, on considère conventionnellement la face 1 dans la position qu'elle occupe normalement sur un utilisateur. Dans ce cas, la face 1 s'étend sensiblement dans un plan vertical, dit plan de la face. Lorsque les branches 8 sont dépliées pour pouvoir être utilisées, elles s'étendent sensiblement dans un plan horizontal perpendiculaire au plan de la face dénommé plan des branches. La face, la monture, la paire de lunettes présentent un plan vertical de symétrie passant par le pont 5 et perpendiculaire au plan de la face dénommé plan de symétrie médian. Ces plans sont référencés P pour le plan de la face (plan des figures 1, 2, 3, 4), Q pour le plan des branches, et R pour le plan de symétrie médian. Toujours dans cette même situation, les centres 2A des deux cercles 2 sont situés en dessous du plan des branches Q. La partie supérieure 9 est située essentiellement au dessus d'un plan dit plan de joint T confondu ou proche du plan des branches Q tandis que la partie inférieure 10 est située en dessous du plan de joint T et donc du même côté que les centres de 2a.

On qualifie également d'interne le côté de la face 1 et plus généralement de la paire de lunettes, situé vers la face de l'utilisateur, et l'on qualifie d'externe le côté opposé qui est visible par l'observateur extérieur. Les branches 8 sont donc situées du côté interne.

Chacune des parties 9, 10 a, en élévation, une forme générale de oméga, à savoir, un oméga minuscule renversé et aplati pour la partie supérieure 9 et un oméga minuscule non renversé pour la partie inférieure 10.

Chacune des parties 9, 10 définit sensiblement deux demi-cercles, un demi-cercle défini par la partie supérieure 9 et un demi-cercle en regard défini par la partie inférieure 10 constituant ensemble un cercle 2. La notion de "demi-cercle" telle qu'elle est utilisée ici, ne signifie pas que chaque partie 9, 10 comprend exactement la moitié d'un cercle 2, mais qu'un cercle 2 est partage en deux parties appartenant respectivement à la partie 9 ou à la partie 10.

Les deux parties 9, 10 comprennent dans les demi-cercles un drageoir 3 qui est de type anti-recul, de manière à maintenir convenablement les oculaires de sécurité 4 y compris en cas de choc frontal important.

A cet effet, la profondeur d'un drageoir 3 peut être de l'ordre de plusieurs millimètres (notamment de l'ordre de 3 millimètres) et le drageoir 3 peut comporter du côté interne une saillie anti-recul 11.

Chaque partie 9, 10 comprend également une moitié de chacune des deux charnières 7. A cet effet, chaque partie 9, 10 comprend, dans chaque embase de charnière 6, une saillie 12 dite saillie de charnière s'étendant sensiblement perpendiculairement au plan de la face P donc située sensiblement dans le plan de joint T ou le plan des branches Q.

La saillie de charnière 12 supporte également un organe formant pivot 13. Il s'agit, dans la réalisation représentée, d'une saillie formant tenon, dirigé vers le haut pour la partie supérieure 9 et vers le bas pour la partie inférieure 10 donc du côté opposé aux plans T et Q. Un organe complémentaire 14 d'une branche 8 tel qu'un trou borgne peut coopérer avec l'organe 13 de manière que la branche 8 puisse pivoter par rapport à la face 1 autour de l'axe 7A de la charnière 7.

Chacune des deux parties 9, 10 comprend également une moitié de pont 5, à savoir la moitié supérieure 15 pour la partie supérieure 9 et la moitié inférieure 16 pour la partie inférieure 10. Il est entendu que la notion de moitié appliquée au pont s'entend avec la même acception que pour les cercles 2.

Les deux moitiés de pont 15, 16 sont conformés en creux et en relief pour permettre le montage amovible d'une clavette d'association rigide rapportée 17. Cette clavette 10, également en matière plastique moulée, est réalisée séparément.

Pour la réalisation d'une paire de lunettes de sécurité, les deux parties 9, 10 sont associées rigidement l'une à l'autre de manière amovible afin de permettre le remplacement ou le changement des oculaires de sécurité 4. Dans cette association rigide, les deux parties 9, 10 sont situées de part et d'autre du plan de joint T, lequel est confondu ou sensiblement proche du plan des branches Q. Dans le plan de joint T se trouvent les deux faces de joint 18, 19 des deux parties 9, 10, respectivement. Ces deux faces 18, 19, sont en contact et appliquées l'une sur l'autre tant dans la zone du pont 5 que dans celles des embases 6.

L'association rigide des deux parties 9, 10 est réalisée dans trois zones, à savoir deux zones extrêmes et une zone médiane. Les deux zones extrêmes sont celles des embases 6 des charnières 7 et des branches 8 et la zone médiane est celle du pont 5. A cet effet, les branches 8 comprennent chacune vers la charnière 7 une partie rigide formant étrier 20 qui enserre les organes formant pivot 13. Ainsi, la réalisation de la charnière 7 entre une face 1 et une branche 8 contribue à assurer le maintien relatif à cet endroit des deux parties 9, 10.

Les deux parties 9, 10 sont également associées rigidement l'une à l'autre à l'endroit du pont 5 grâce à la clavette 17.

Préférentiellement, il est prévu sur les deux faces de joint 18, 19 des reliefs réciproquement complémentaires 21, 22 coopérant entre eux lorsque les deux parties 9, 10 sont associées l'une à l'autre. Ces reliefs se présentent par exemple sous la forme d'ergot et de trou borgne. La présence de ces reliefs 21, 22 permet d'assurer l'aplomb des deux parties 9, 10 l'une par rapport à l'autre et d'éviter leur coulissement relatif intempestif perpendiculairement au plan de la face P.

Le pont 5 comprend, dans la réalisation considérée, des reliefs de guidage 23 s'étendant sur au moins un des deux côtés de la face 1 à savoir le côté interne. Ces reliefs de guidage 23 s'étendent sensiblement perpendiculairement au plan de joint T donc sensiblement parallèlement au plan de symétrie médian R. Ces reliefs de guidage sont situés pour partie sur la partie supérieure 9 et pour partie sur la partie inférieure 10 respectivement sur les deux moitiés de pont 15, 16. Ils sont en prolongation les uns des autres pour les deux parties 9, 10 associées entre elles.

Dans la réalisation représentée sur les dessins, les reliefs de guidage 23 sont une rainure en creux, qui dans la partie inférieure 10 a un profil en queue d'aronde ce qui permet le coulissement et le maintien perpendiculairement au plan de la face P de la clavette 17. Dans la partie supérieure 9, la rainure 23 est dépourvue de queue d'aronde.

Par ailleurs, le pont 5 comprend deux zones d'appui pour la clavette 17 situées respectivement sur les deux parties 9, 10. Il s'agit d'une zone d'appui supérieure 24 située au dessus du pont 5 pour la partie supérieure 9 et la moitié de pont 15 et d'une zone d'appui inférieure 25 située en dessous du pont pour la partie inférieure 10 et la moitié de pont 16.

La zone d'appui supérieure 24 est en forme de creux. Elle est située en prolongement de la rainure 23 et elle s'étend sensiblement perpendiculairement au plan de la face P sur le bord supérieur de la partie supérieure 9 opposée à sa face de joint 18. A cet endroit, le pont 5 présente donc un décrochement dans lequel vient se loger la partie en forme d'équerre ou de crochet de la clavette 17, ainsi que cela est décrit.

La zone d'appui inférieure 25 est constituée par la surface libre externe inférieure du pont 5 et les surfaces externes attenantes des demi-cercles de la partie inférieure 10. Il est à noter ici que l'épaisseur, dans le plan P de la moitié de pont 16 est sensiblement inférieure à celle qu'aurait une paire de lunettes de sécurité classique. En effet, l'encombrement et la forme de la paire de lunettes de sécurité selon l'invention résultent de la combinaison, en l'occurrence, du demi-pont 16 avec la partie correspondante de clavette 17 qui vient en surépaisseur.

Préférentiellement, une saillie 12 a, avec l'embase 6 et la face 1 une certaine élasticité. De plus, la saillie 12 de la partie supérieure 9 est dirigée vers le haut tandis que la saillie 12 de la partie inférieure 10 est dirigée vers le bas. Les deux saillies 12 des deux parties 9, 10 assemblées l'une avec l'autre sont donc divergentes l'une de l'autre et dirigées vers l'opposé du plan T. Cela permet de faire coopérer à force les organes 13, 14, les saillies 12 étant déformées élastiquement dans le sens de leur rapprochement grâce à l'étrier rigide 20. Il en résulte simultanément un bon maintien des parties 9 et 10.

La clavette 17 fait fonction de nez-selle et également, ainsi que déjà mentionné, d'organe d'association rigide des deux parties 9, 10 à l'endroit du pont 5. A cet effet, la clavette 17, ayant une forme massive monobloc, comprend une partie médiane 26 d'association avec la partie inférieure 10. Cette partie médiane 26 a une forme complémentaire de queue d'aronde de manière à pouvoir coopérer avec la partie de rainure 23 également en forme de queue d'aronde située sur la partie inférieure 10.

La clavette 17 comprend également une deuxième partie 27 terminale, supérieure, en saillie en forme d'équerre ou de crochet, dirigée, sur la face 1 montée, vers le côté externe, destinée à venir s'appliquer en blocage sur la zone d'appui supérieure 24 de la partie supérieure 9 de la face 1, dans le décrochement prévu à cet effet.

La clavette 17 comprend également une troisième partie 28, également terminale mais inférieure, renflée, située à l'opposé de la partie 27, formant le nez-selle. Cette partie vient s'appliquer en blocage sur la partie inférieure 10 dans la zone d'appui inférieure 25.

Lorsque la face 1 est montée, les deux parties 9, 10 étant associées l'une avec l'autre au moyen de la clavette 17, cette dernière vient remplir la rainure 23.

Pour assurer au pont 5 une résistance suffisante malgré la présence de la rainure 23, il est prévu que les deux parties 9, 10 présentent des reliefs 29, 30 situés du côté externe, au droit et à l'opposé de la rainure 23. Ces reliefs 29 viennent en prolongement les uns des autres lorsque les deux parties 9, 10 sont assemblées entre elles.

La structure qui vient d'être décrite permet d'avoir plusieurs types de clavettes 17 correspondant à différentes formes de nez-selle.

## Revendications

1. Face (1) pour monture de lunettes de sécurité en matière plastique injectée caractérisée par le fait qu'elle comprend deux parties distinctes respectivement supérieure (9) et inférieure (10); chacune de ces parties (9, 10) définissant sensiblement deux demi-cercles pourvus de profonds drageoirs (3) anti-reculs et comprenant d'une part une moitié de chacune de deux charnières (7) de branches (8) ayant une saillie (12) s'étendant sensiblement perpendiculairement au plan principal de la face supportant un organe formant pivot (13) avec lequel peut coopérer un organe complémentaire (14) d'une branche (8), et d'autre part une moitié du pont (5) ; les deux moitiés (15, 16) du pont (5) étant conformées en creux et en relief pour permettre le montage amovible d'une clavette (17) d'association rigide; les deux parties (9, 10) étant associées rigidement l'une à l'autre de manière amovible de part et d'autre d'un plan de joint (T) où se trouvent les deux faces de joint (18, 19) en contact des deux parties (9, 10), d'une part à l'endroit des deux charnières (7) de branches (8), grâce aux branches (8) qui enserrent les organes (13) formant pivot de la face (1) et, d'autre part, à l'endroit du pont (5) grâce à la dite clavette (17).

2. Face (1) selon la revendication 1, caractérisée par le fait que les deux faces de joint (18, 19) des deux parties (9, 10) comprennent des reliefs (21, 22) réciproquement complémentaires coopérant entre eux lorsque les deux parties (9, 10) sont associées l'une à l'autre, de manière que les deux parties (9, 10) soient maintenues à l'aplomb l'une de l'autre.

3. Face (1) selon l'une quelconque des revendications 1 et 2, caractérisée par le fait que le pont (5) comprend des reliefs de guidage (23) s'étendant sur au moins un des deux côtés de la face (1), sensiblement perpendiculairement au plan de joint (T), situés pour partie sur l'une des parties et pour partie sur l'autre et, d'autre part, deux zones d'appui (24, 25) pour la clavette (17) situées respectivement sur les deux parties (9, 10) à savoir au-dessus du pont (5) pour la partie supérieure (9) et en-dessous pour la partie inférieure (10).

4. Face (1) selon la revendication 3, caractérisée par le fait que les reliefs de guidage (23) sont situés sur le côté interne de la face (1).

5. Face (1) selon l'une quelconque des revendications 3 et 4, caractérisée par le fait que les reliefs de guidage (23) sont une rainure au moins partiellement en queue d'aronde.

6. Face (1) selon la revendication 5, caractérisée par le fait que la zone d'appui (24) sur la partie supérieure (9) est un creux situé en prolongement de la rainure (23).

7. Face (1) selon la revendication 5, caractérisée par le fait que la zone d'appui (25) sur la partie inférieure (10) est la surface libre externe du pont (5) et des demi-cercles attenants.

8. Face (1) selon la revendication 1, caractérisée par le fait qu'une saillie (12) supportant un organe pivot (13) pour une branche (8) a, avec la partie de laquelle elle saille , une certaine élasticité ; et par le fait que les deux saillies (12) de la même charnière (7) sont enserrées élastiquement par les branches (8), ce qui renforce le maintien de la face (1) montée.

9. Face (1) selon l'une quelconque des revendications 4 et 5, caractérisée par le fait que les deux parties (9, 10) présentent des reliefs (29, 30) en prolongement, situés au droit et à l'opposé de la rainure (23).

10. Clavette (17) pour la face selon l'une quelconque des revendications 1 à 9, caractérisée par le fait qu'elle se présente sous la forme d'une pièce moulée en matière plastique ayant une première partie médiane (26) d'association avec la partie inférieure (10) de la face (1), une deuxième partie (27) terminale en saillie, destinée à venir s'appliquer en blocage sur la zone d'appui supérieure (24) de la partie supérieure (9) de la face (1), et une troisième partie (28) également terminale, renflée, formant un nez-selle, et venant s'appliquer en blocage sur la partie inférieure (10) dans la zone d'appui inférieure (25).

11. Monture de lunettes de sécurité comprenant une face (1) selon l'une quelconque des revendications 1 à 9, une clavette (17) selon la revendication 10 et deux branches (8).

12. Paire de lunettes de sécurité comprenant une monture de sécurité selon la revendication 11 et deux oculaires de sécurité dans les cercles (2) de la monture.
